# DEMANDE DE BREVET EUROPEEN

(11) **EP 4 465 482 A1**
(43) Date de publication de la demande: **20.11.2024**
(21) Numéro de dépôt: 24176473.7
(22) Date de dépôt: 16.05.2024
(51) Int. Cl.: H02J 9/06, H02M 1/10, H02M 5/293

(54) **CIRCUIT D'ALIMENTATION SANS INTERRUPTION COMPRENANT UN CONVERTISSEUR DE TENSION ABAISSEUR-ELEVATEUR**

(30) Priorité: 16.05.2023 FR 2304853
(71) Demandeur: Commissariat à l'Energie Atomique et aux Energies Alternatives, 75015 Paris (FR)
(72) Inventeur: STERNA, Léo, 38054 GRENOBLE Cedex 09 (FR); LANNELUC, Charley, 38054 GRENOBLE Cedex 09 (FR); PERICHON, Pierre, 38054 GRENOBLE cedex 09 (FR)
(74) Mandataire: Atout PI Laplace

(57) **Abrégé**

L'invention concerne un circuit d'alimentation sans interruption (100) configuré pour, dans un premier mode de fonctionnement, alimenter un deuxième réseau électrique alternatif à partir d'un premier réseau électrique alternatif (30) ; et, dans un deuxième mode de fonctionnement, alimenter le deuxième réseau électrique alternatif à partir d'une source de tension continue (40). Ledit circuit comporte un convertisseur de tension abaisseur-élévateur (110) comprenant deux bornes d'entrée (111, 112) configurées pour, dans le premier mode de fonctionnement, recevoir entre elles une tension alternative (V30) du premier réseau (30) ; et, dans le deuxième mode de fonctionnement, recevoir une tension continue (V40) de la source de tension continue (40) ; et deux bornes de sortie (121, 122) configurées pour, dans le premier et le deuxième mode de fonctionnement, recevoir entre elles une tension alternative (V50) du deuxième réseau électrique alternatif ; ledit convertisseur de tension abaisseur-élévateur (110) étant configuré pour, dans le premier mode de fonctionnement, réaliser une conversion AC/AC entre le premier réseau électrique alternatif (30) et le deuxième réseau électrique alternatif.

## Description

L'invention concerne un circuit d'alimentation sans interruption, notamment un circuit d'alimentation sans interruption configuré pour alimenter un deuxième réseau électrique alternatif à partir d'un premier réseau électrique alternatif, et en cas de défaillance du premier réseau électrique alternatif, alimenter le deuxième réseau électrique alternatif à partir d'une source de tension continue.

Les alimentations sans interruption ou ASI, encore appelées UPS (pour « Uninterruptible power supply » en anglais) sont des dispositifs électriques destinés à permettre une continuité de service en cas de coupure dans l'alimentation électrique d'un système électrique à partir d'un réseau électrique. En faisant l'interface entre le réseau électrique et le système, l'alimentation sans interruption peut aussi améliorer la qualité de l'énergie offerte par le réseau électrique. Parmi les systèmes utilisant les ASIs, on compte les banques, les hôpitaux, les universités, ou des centres informatiques (« data center » en anglais).

Typiquement, une ASI est configurée pour réaliser deux conversions électriques. Dans un fonctionnement normal, l'ASI met en oeuvre une conversion alternative-alternative (AC/AC) dans laquelle une énergie prélevée sur le réseau électrique alternatif est délivrée au système électrique alternatif. En cas de défaillance du réseau électrique alternatif, une conversion continue-alternative (DC/AC) est mise en oeuvre entre une source d'énergie électrique continue, telle qu'une batterie, et le système électrique alternatif de manière à poursuivre l'alimentation du système électrique alternatif.

Il existe des gammes d'alimentations sans interruption qui correspondent à des types de conversion AC/AC visés. Ainsi, pour les applications domestiques ou non critiques, on connaît des alimentations sans interruption à tension et fréquence dépendantes ou VFD (pour « Voltage and Frequency Dépendent » en anglais). Ces alimentations VFD se caractérisent par une tension et une fréquence délivrées au système électrique, qui dépendent de celles émises par le réseau électrique. Ces alimentations sont généralement réservées à des applications allant jusqu'à 1500 VA. On connaît en outre des alimentations sans interruption à tension indépendante ou VI (pour « Voltage Independent » en anglais). Ces alimentations se caractérisent par une tension délivrée au réseau électrique qui peut être contrôlée indépendamment de la tension émise par le réseau électrique. L'alimentation VI peut contrôler la tension délivrée au système électrique. La fréquence est par contre généralement non modifiable. Ce type d'alimentation est généralement réservé aux applications allant jusqu'à 5000 VA, telles que pour les serveurs informatiques de petites entreprises par exemple. Il existe aussi des alimentations sans interruption à tension et fréquence indépendantes ou VFI (pour « Voltage and Frequency Independent »), dans lesquelles la tension et la fréquence délivrées au système électrique sont contrôlables par l'ASI. De telles ASI VFI sont généralement réservées aux applications au-delà de 5000 VA.

On connaît une ASI décrite dans la publication de demande de brevet WO2013/130054 A1. Cette ASI a un fonctionnement en tension indépendante, basé sur une conversion delta. Une telle conversion delta utilise un transformateur dont un enroulement est connecté en série entre le réseau électrique et le système électrique. La tension aux bornes de cet enroulement est contrôlée par un onduleur. L'enroulement du transformateur permet de corriger les fluctuations du réseau électrique. Cependant, une capacité de stockage DC est requise pour la compensation des harmoniques. Une telle capacité de stockage DC est encombrante. L'encombrement de l'ASI est en outre impacté par le volume, le poids du transformateur. L'ASI de cet art antérieur a aussi pour inconvénient que le contrôle du transformateur nécessite la surveillance de son flux magnétique, ce qui peut s'avérer complexe à mettre en oeuvre. De plus, si auparavant la conversion delta permettait d'utiliser un convertisseur qui n'est pas dimensionné pour un fonctionnement nominal dans la conversion AC/AC, les technologies d'interrupteurs ont beaucoup progressé en termes de pertes avec l'émergence des technologies SiC ou GaN, rendant l'utilisation de la conversion delta moins avantageuse. Enfin, L'ASI décrit dans ce document a une structure modulaire qui lui permet d'avoir un fonctionnement VI ou VFI. Or, certains utilisateurs peuvent n'avoir besoin que de la seule fonctionnalité de tension indépendante, à savoir un ASI délivrant une tension indépendante de celle délivrée par le réseau électrique mais en conservant la fréquence du réseau électrique.

Il est donc recherché une ASI à tension indépendante qui présente un encombrement réduit par rapport à l'art antérieur.

A cet effet, l'invention propose un circuit d'alimentation tel que défini dans les revendications.

D'autres caractéristiques et avantages de la présente invention apparaîtront mieux à la lecture de la description qui suit en relation aux figures annexées suivantes :
[Fig. 1] : la figure 1 représente un circuit d'alimentation sans interruption selon un exemple de l'invention ;
[Fig. 2] : la figure 2 illustre un premier mode de fonctionnement du circuit représenté en figure 1 ;
[Fig. 3] : la figure 3 illustre une partie d'un deuxième mode de fonctionnement du circuit illustré en figure 1 ;
[Fig.4] : la figure 4 illustre une autre partie du deuxième mode de fonctionnement ;
[Fig. 5] : la figure 5 représente une circulation du courant dans le circuit de la figure 1 ;
[Fig 6] : la figure 6 représente une circulation du courant dans le circuit de la figure 1 ;
[Fig 7] : la figure 7 illustre un troisième mode de fonctionnement du circuit d'alimentation sans interruption.

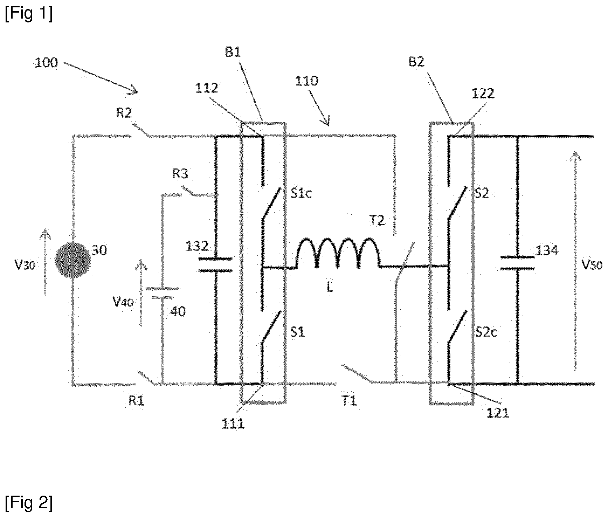

La figure 1 présente un circuit d'alimentation sans interruption 100 selon un exemple de l'invention. Le circuit d'alimentation 100 peut avoir au moins deux modes de fonctionnement pour assurer une alimentation sans coupure d'un deuxième réseau électrique alternatif auquel il est connecté. Le deuxième réseau électrique alternatif appartient notamment à une installation pour laquelle toute coupure dans l'alimentation électrique doit être évitée. Une telle installation est par exemple une banque, un hôpital, une université, ou un centre informatique.

Dans un premier mode de fonctionnement, le circuit d'alimentation 100 assure une alimentation électrique du deuxième réseau électrique alternatif à partir d'un premier réseau électrique alternatif 30. Le premier réseau électrique alternatif 30 est notamment un réseau électrique publique.

Dans un deuxième mode de fonctionnement, le circuit d'alimentation 100 assure une alimentation électrique du deuxième réseau électrique alternatif à partir d'une source de tension continue 40. Ainsi, en cas de défaillance du premier réseau électrique alternatif 30, la source de tension continue 40 permet une continuité de l'alimentation du deuxième réseau électrique. En particulier, il s'agit d'une alimentation temporaire, le temps qu'une source électrique robuste soit mise en route, telle qu'un groupe électrogène par exemple. La source de tension continue 40 peut être, entre autres, une batterie, comme par exemple une batterie lithium/plomb, ou une super capacité. La batterie peut être embarquée dans un rack du circuit d'alimentation sans interruption 100.

Le circuit d'alimentation sans interruption 100 comprend un convertisseur de tension abaisseur-élévateur 110 (ou « buck-boost » en anglais). Deux bornes d'entrée 111, 112 du convertisseur de tension abaisseur-élévateur 110 sont configurées pour, dans le premier mode de fonctionnement, recevoir entre elles une tension alternative V30 du premier réseau électrique alternatif 30. Le premier réseau électrique alternatif 30 est alors connecté entre les deux bornes d'entrée 111, 112, notamment directement connecté entre les deux bornes d'entrée 111, 112. Dans le deuxième mode de fonctionnement, les deux bornes d'entrée 111, 112 du convertisseur de tension abaisseur-élévateur 110 reçoivent une tension continue V40 de la source de tension continue 40. La source de tension continue 40 est alors connectée entre les deux bornes d'entrée 111, 112, notamment directement connectée entre les deux bornes d'entrée 111, 112. Le convertisseur de tension abaisseur-élévateur 110 comprend en outre deux bornes de sortie 121, 122 qui, dans le premier et le deuxième mode de fonctionnement, reçoivent entre elles une tension V50.du deuxième réseau électrique alternatif. Le deuxième réseau électrique alternatif est alors connecté, notamment directement connecté, entre les deux bornes de sortie 121, 122.

Dans le premier mode de fonctionnement, le convertisseur abaisseur-élévateur 110 réalise une conversion AC/AC (alternative/alternative) entre le premier 30 et le deuxième réseau électrique. Les convertisseurs de tension abaisseur-élévateur sont bien connus dans l'art antérieur pour une conversion DC/DC (continu-continu), mais pas pour une conversion AC/AC, en particulier dans une alimentation sans interruption. Le convertisseur de tension abaisseur-élévateur 110 permet de réaliser l'alimentation sans interruption de façon simple. En outre, de par sa configuration, il est réutilisable dans la conversion DC/AC du deuxième mode de fonctionnement.

Notamment, dans le premier mode de fonctionnement, le convertisseur de tension abaisseur-élévateur 110 permet au circuit d'alimentation 100 d'être indépendant en tension, mais pas en fréquence. Autrement dit, grâce au convertisseur de tension abaisseur-élévateur 110, le circuit d'alimentation 100 régule notamment la tension efficace délivrée au deuxième réseau électrique, de sorte qu'elle peut être différente de celle délivrée par le premier réseau électrique 30. En particulier, le convertisseur abaisseur-élévateur 110 permet de convertir une tension alternative V30 du premier réseau électrique alternatif 30 en une deuxième tension alternative V50 formant la tension de sortie délivrée au deuxième réseau électrique alternatif ; la fréquence délivrée par le circuit d'alimentation 100 restant égale à celle du deuxième réseau électrique 30.

En particulier, le convertisseur de tension abaisseur-élévateur 100 comprend un premier bras d'interrupteurs B1 comportant un premier interrupteur S1 et un deuxième interrupteur S1c. En particulier, chaque interrupteur S1, S1c a deux bornes de contact. Les deux interrupteurs S1, S1c ont une borne commune qui constitue le point milieu du premier bras B1. Des bornes extrémales du premier bras B1 forment les bornes d'entrée 111, 112 du convertisseur de tension abaisseur-élévateur 110. Autrement dit, en particulier, pour chaque interrupteur S1, S1c, la borne opposée au point milieu forme une borne d'entrée 111, 112 du convertisseur de tension abaisseur-élévateur 110. Le convertisseur de tension abaisseur-élévateur 110 comprend notamment un deuxième bras d'interrupteurs B2. De manière similaire au premier bras B1, le deuxième bras B2 comporte un premier interrupteur S2 et un deuxième interrupteur S2c. Des bornes extrémales du deuxième bras B2 forment les bornes de sorties 121, 122 du convertisseur de tension abaisseur-élévateur 110. Autrement dit, en particulier, pour chaque interrupteur S2, S2c du deuxième bras B2, la borne opposée au point milieu du deuxième bras forme une borne de sortie 121, 122 du convertisseur de tension abaisseur-élévateur 110.

Notamment, le convertisseur de tension abaisseur-élévateur 110 comprend en outre une inductance L. L'inductance L est connectée entre le point milieu du premier bras B1 et le point milieu du deuxième bras B2. Autrement dit, l'inductance L a notamment deux bornes de contact : l'une est connectée, notamment directement connectée, au point milieu du premier bras B1 ; l'autre est connectée, notamment directement connectée, au point milieu du deuxième bras B2.

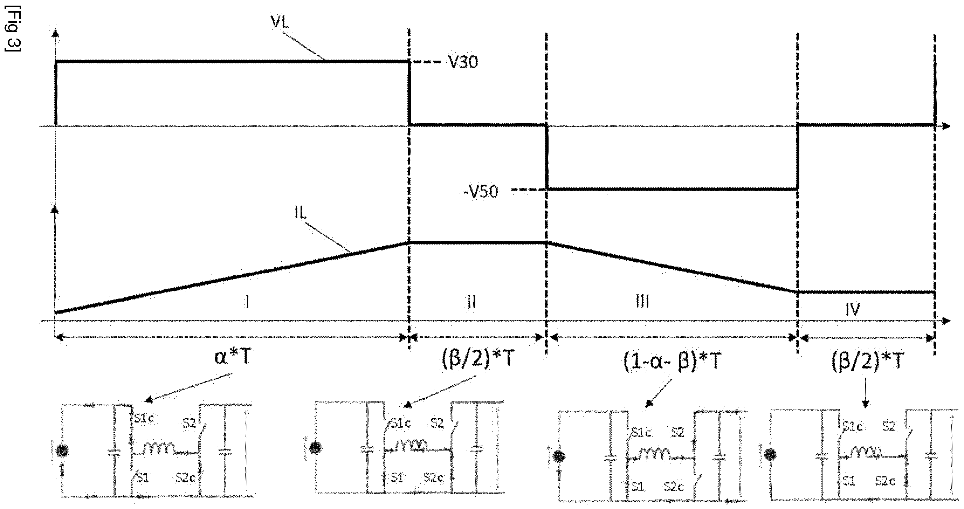

Grâce aux interrupteurs S1, S1c, S2, S2c, le convertisseur de tension abaisseur-élévateur 110 assure une conversion par une accumulation d'énergie dans l'inductance L, qui permet d'élever ou abaisser la tension entre l'entrée et la sortie. Ainsi, le circuit d'alimentation sans interruption 100 permet d'assurer, dans le premier mode de fonctionnement, une alimentation entre un premier et un deuxième réseau électrique alternatif présentant par exemple l'un des couples de tension suivants 115Vac/230Vac, 230Vac/115Vac, 115Vac/115Vac ou 230Vac/230Vac. A cet effet, une borne d'entrée 111 du convertisseur de tension abaisseur-élévateur 110 est connectée à une borne de sortie 121 du convertisseur de tension abaisseur-élévateur 110, comme il sera expliqué plus loin en relation avec la figure 2.

En particulier, dans le deuxième mode de fonctionnement, le convertisseur de tension abaisseur-élévateur 110 réalise la conversion DC/AC entre la source de tension continue 40 et le deuxième réseau électrique alternatif. Notamment, une borne d'entrée 111 du convertisseur abaisseur-élévateur 110 est alors connectée à une borne de sortie 121 du convertisseur abaisseur-élévateur 110. Une telle conversion DC/AC par le convertisseur de tension abaisseur-élévateur 110 est notamment rendue possible par des interrupteurs T1, T2, dits interrupteurs de basculement. Ces interrupteurs de basculement T1, T2 permettent de connecter sélectivement une des bornes d'entrée 111, 112 à une première 121 des bornes de sortie. Ce faisant, les interrupteurs T1, T2 déterminent la polarité de la source d'énergie qui est connectée à la première borne de sortie 121. En particulier, dans le deuxième mode de fonctionnement, les interrupteurs T1, T2 permettent d'inverser successivement la polarité de la source de tension continue 40 de manière à délivrer une tension alternative positive ou négative en sortie du circuit d'alimentation sans interruption 100. Ainsi, le convertisseur de tension abaisseur-élévateur 110 est utilisable aussi bien dans le premier mode de fonctionnement que dans le deuxième. Cette mutualisation des composants électriques entre le circuit réalisant la conversion AC/AC et celui réalisant la conversion DC/AC permet de diminuer les coûts et d'augmenter la densité de puissance de l'alimentation sans interruption 100 par rapport à l'art antérieur. En outre, dans le deuxième mode de fonctionnement, le convertisseur de tension abaisseur-élévateur 110 permet notamment de contrôler la fréquence de la tension alternative délivrée en sortie. Ainsi, la fréquence de la tension alternative en sortie peut être variable.

Notamment, un premier interrupteur de basculement T1 est connecté entre une première borne d'entrée 111 du convertisseur de tension abaisseur-élévateur 110 et la première borne de sortie 121 du convertisseur de tension abaisseur-élévateur 110 ; et un deuxième interrupteur de basculement T2 est connecté entre une deuxième borne d'entrée 112 du convertisseur abaisseur-élévateur 110 et la première borne de sortie 121 du convertisseur de tension abaisseur-élévateur 110. Grâce à cette configuration, les interrupteurs T1, T2 permettent de changer de façon simple, dans le deuxième mode de fonctionnement, la polarité de la source de tension 40 aux bornes d'entrée 111, 112 du convertisseur de tension abaisseur-élévateur 110 pour la mise en oeuvre de la conversion DC/AC. De préférence, les interrupteurs T1, T2 sont dans des états complémentaires. Autrement dit, ils sont ne sont pas ouverts ou fermés en même temps.

En particulier, la première borne de sortie 121 est connectée, notamment directement connectée, à une borne négative du deuxième réseau électrique alternatif ; et la deuxième borne de sortie 122 est connectée, notamment directement connectée, à une borne positive du deuxième réseau électrique alternatif.

Le circuit d'alimentation sans interruption 100 peut en outre comprendre une première capacité 132 à l'interface entre le circuit d'alimentation sans interruption 100 et le premier réseau électrique alternatif 30 ou la source de tension continue 40 ; une deuxième capacité 134 entre le circuit d'alimentation sans interruption 100 et le deuxième réseau électrique alternatif. Ainsi, la première capacité 132 peut être connectée entre les bornes d'entrée 111, 112. La deuxième capacité 134 peut être connectée entre les bornes de sortie 121, 122.

Le premier mode de fonctionnement du circuit d'alimentation 100 va maintenant être décrit plus en détail en faisant référence à la figure 2. La figure 2 présente en partie haute une allure de la tension VL aux bornes de l'inductance L et une allure du courant IL aux bornes de l'inductance L. Les schémas électriques en partie basse représentent chacun l'état du circuit d'alimentation sans interruption 100 et le courant y circulant dans une partie I, II, III, IV d'une période T de découpage des interrupteurs S1, S1c, S2, S2c du convertisseur de tension abaisseur-élévateur 110.

Notamment, dans le premier mode de fonctionnement, le premier interrupteur T1 est fermé et le deuxième interrupteur T2 est ouvert. En particulier, la première borne d'entrée 111 est alors reliée à une borne négative du premier réseau électrique alternatif 30 ; et la deuxième borne d'entrée 112 est alors reliée à une borne positive du premier réseau électrique alternatif 30.

Notamment, la borne négative du premier réseau électrique alternatif 30 connectée à la première borne d'entrée 111 forme une masse du premier réseau électrique alternatif 30 ; et la borne négative du deuxième réseau électrique alternatif connectée à la première borne de sortie 121 forme une masse du deuxième réseau électrique alternatif. Ainsi, une connexion entre les masses du premier réseau électrique 30 et le deuxième réseau électrique est facilement obtenue. Une telle connexion (également connue sous l'expression « Neutral Passing Through » en anglais) peut être avantageuse dans les alimentations sans interruption. Une telle connexion est notamment imposée par certaines normes relatives aux alimentations sans interruption.

En particulier, les interrupteurs S1, S1c, S2, S2c sont commutés avec une fréquence de découpage, correspondant à la période de découpage T. Le rapport entre la tension d'entrée V30 et la tension de sortie V50 est notamment fonction d'un rapport cyclique α d'ouverture des interrupteurs S1, S1c, S2, S2c du convertisseur de tension abaisseur-élévateur 110.

Un exemple de commutations des interrupteurs va être décrit dans ce qui suit. Dans une première partie I d'une durée αT de la période de découpage T, le premier interrupteur S1 du premier bras B1 est ouvert et le deuxième interrupteur S1c du bras est fermé ; et le premier interrupteur S2 du deuxième bras B2 est ouvert et le deuxième interrupteur S2c du bras est fermé. La tension VL aux bornes de l'inductance L est alors égale à celle V30 du premier réseau électrique 30. Le courant IL traversant l'inductance augmente progressivement. L'énergie issue du premier réseau électrique 30 s'accumule alors dans l'inductance L.

Dans une deuxième partie Il facultative d'une durée (β/2)T de la période de découpage T, le premier interrupteur S1 du premier bras B1 est fermé et le deuxième interrupteur S1c du bras est ouvert ; et le premier interrupteur S2 du deuxième bras B2 est ouvert et le deuxième interrupteur S2c du bras est fermé. Cette partie Il est une étape de roue libre qui permet de dissiper d'éventuelles charges résiduelles et d'éviter une casse des interrupteurs lors du changement entre la première phase I et une troisième partie III.

Dans la troisième partie III d'une durée (1-α-β)T de la période de découpage T, le premier interrupteur S1 du premier bras B1 est fermé et le deuxième interrupteur S1c du bras est ouvert ; et le premier interrupteur S2 du deuxième bras B2 est fermé et le deuxième interrupteur S2c du bras est ouvert. L'énergie accumulée dans l'inductance L lors de la première partie I se décharge vers le deuxième réseau électrique alternatif. La tension VL aux bornes de l'inductance L est alors égale à celle V50 du deuxième réseau électrique. Le courant IL traversant l'inductance diminue progressivement.

Dans une quatrième partie IV facultative d'une durée (β/2)T de la période de découpage T, le premier interrupteur S1 du premier bras B1 est fermé et le deuxième interrupteur S1c du bras est ouvert ; et le premier interrupteur S2 du deuxième bras B2 est ouvert et le deuxième interrupteur S2c du bras est fermé. Cette partie Il est une étape de roue libre pour atténuer les irrégularités dans le passage de la troisième partie III à une première partie I de la période de découpage T suivante. La tension VL aux bornes de l'inductance L est alors nulle. Le courant IL traversant l'inductance reste sensiblement stable.

En figure 2, les flèches dans les circuits électriques indiquent le sens du courant. Les sens indiqués correspondent à une alternance positive du premier réseau électrique alternatif. Sur l'alternance négative les courants sont notamment de sens opposé.

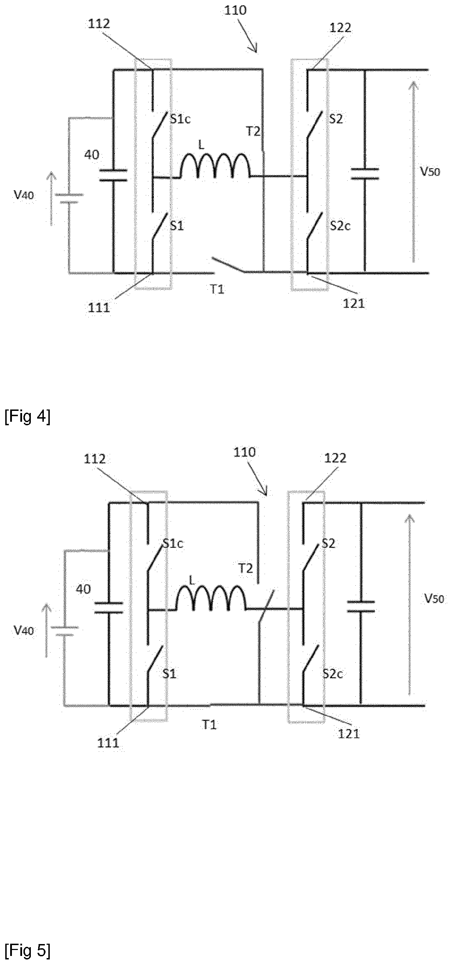

Le deuxième mode de mode de fonctionnement du circuit d'alimentation 100 va maintenant être décrit plus en détail en faisant référence aux figures 3 et 4. Notamment, dans le deuxième mode de fonctionnement, la première borne d'entrée 111 est connectée, notamment directement connectée, à une borne négative de la source de tension continue 40 ; et la deuxième borne d'entrée 112 est connectée, notamment directement connectée, à une borne positive de la source de tension continue 40.

Comme dans le premier mode de fonctionnement, la conversion DC/AC du deuxième mode de fonctionnement repose notamment sur une accumulation d'énergie dans l'inductance L, qui permet d'élever ou abaisser la tension entre l'entrée et la sortie, et ainsi de générer une tension alternative en sortie. Grâce aux interrupteurs de basculement T1, T2, le convertisseur de tension abaisseur-élévateur 110 peut délivrer en sortie un signal alternatif présentant une alternance positive et une alternance négative. En effet, les interrupteurs T1, T2 permettent de connecter la source de tension continue 40 au convertisseur abaisseur-élévateur 110 avec une première polarité lors d'une alternance positive de la tension alternative V50 du deuxième réseau électrique ; et les interrupteurs T1, T2 permettent de connecter la source de tension continue 40 au convertisseur abaisseur-élévateur 110 avec une deuxième polarité, inverse de la première, lors d'une alternance négative de la tension alternative V50 du deuxième réseau électrique.

En particulier, comme par exemple illustré en figure 3, sur l'alternance négative de la tension alternative V50 du deuxième réseau électrique, le premier interrupteur T1 est ouvert et le deuxième interrupteur T2 est fermé. Ainsi, la deuxième borne d'entrée 112 est connectée à la première borne de sortie 121. En particulier, la borne positive de la source de tension 40 est connectée à la borne négative du deuxième réseau électrique alternatif. Les interrupteurs S1, S1c, S2, S2c du convertisseur de tension abaisseur-élévateur 110 sont alors commandés suivant une fréquence de découpage, notamment de manière similaire au premier mode de fonctionnement, pour délivrer l'alternance négative de la tension V50 du deuxième réseau électrique alternatif.

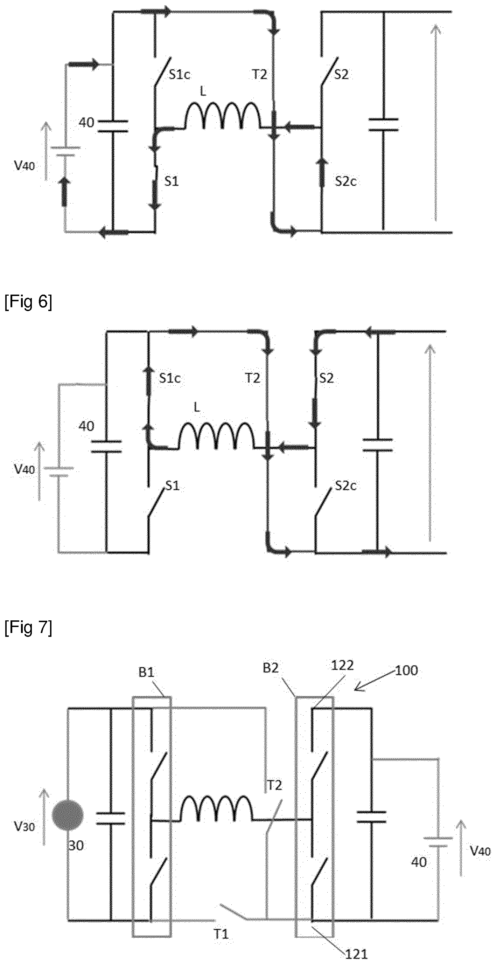

Plus particulièrement dans l'alternance négative, comme par exemple illustré en figure 5, dans une première partie d'une durée αT de la période de découpage T, le premier interrupteur S1 du premier bras B1 est fermé et le deuxième interrupteur S1c du bras est ouvert ; et le premier interrupteur S2 du deuxième bras B2 est ouvert et le deuxième interrupteur S2c du bras est fermé. L'énergie issue de la source de tension continue 40 s'accumule alors dans l'inductance L. En particulier, comme par exemple illustré en figure 6, dans une partie successive d'une durée (1-α)T de la période de découpage T, le premier interrupteur S1 du premier bras B1 est ouvert et le deuxième interrupteur S1c du bras est fermé ; et le premier interrupteur S2 du deuxième bras B2 est fermé et le deuxième interrupteur S2c du bras est ouvert. L'énergie accumulée dans l'inductance L lors de la première phase illustrée en figure 5 se décharge dans le deuxième réseau électrique. Une partie facultative de roue libre, dans laquelle le deuxième interrupteur S1c du premier bras B1 et le deuxième interrupteur S2c du deuxième bras B2 sont fermés, peut s'intercaler entre les parties illustrées en figures 5 et 6.

En particulier, comme par exemple illustré en figure 4, sur l'alternance positive de la tension alternative V50 du deuxième réseau électrique, le premier interrupteur T1 est fermé et le deuxième interrupteur T2 est ouvert. Ainsi, la première borne d'entrée 111 est connectée à la première borne de sortie 121. En particulier, la borne négative de la source de tension 40 est connectée à la borne négative du deuxième réseau électrique alternatif. Les interrupteurs S1, S1c, S2, S2c du convertisseur de tension abaisseur-élévateur 110 sont alors commandés suivant une fréquence de découpage, notamment de manière similaire au premier mode de fonctionnement, pour délivrer l'alternance positive de la tension V50 du deuxième réseau électrique alternatif.

En faisant de nouveau référence à la figure 1, le circuit d'alimentation sans interruption 100 passe notamment du premier au deuxième mode de fonctionnement et vice-versa grâce à un jeu d'interrupteurs R1, R2, R3.

En particulier, deux interrupteurs R1, R2 permettent de connecter le premier réseau électrique alternatif 30 au circuit d'alimentation sans interruption 100 dans la première configuration (premier mode de fonctionnement). Dans la deuxième configuration (deuxième mode de fonctionnement), les interrupteurs R1, R2 déconnectent la première alimentation électrique 30. A cet effet, un premier interrupteur R1 est de préférence connecté entre la première borne d'entrée 111 du convertisseur de tension abaisseur-élévateur 110 et une première borne du premier réseau électrique 30. Un deuxième interrupteur R2 est de préférence connecté entre la deuxième borne d'entrée 112 du convertisseur de tension abaisseur-élévateur 110 et une deuxième borne du premier réseau électrique 30. Ces deux interrupteurs R1, R2 sont notamment configurés pour s'ouvrir ou se fermer simultanément.

Notamment, le jeu d'interrupteur comprend en outre un troisième interrupteur R3 qui, dans la première configuration, déconnecte la source de tension continue 40 du convertisseur de tension abaisseur-élévateur 110 ; et dans la deuxième configuration, connecte la source de tension continue 40 au convertisseur de tension abaisseur-élévateur 110. En particulier, une première borne de la source de tension 40 est connectée à la première borne d'entrée 111 ; et le troisième interrupteur R3 est connecté entre une deuxième borne de la source de tension continue 40 et la deuxième borne d'entrée 112. Le jeu d'interrupteurs R1, R2, R3 pourrait avoir une configuration différente. Par exemple, un interrupteur pourrait être connecté entre la première borne de la source de tension 40 et la première borne d'entrée 111. Les interrupteurs R1, R2, R3 sont commandés/contrôlés par un contrôleur/unité de commande. Ils peuvent être conçus sous la forme de relais. Le contrôleur peut être intégré au convertisseur de tension abaisseur-élévateur, ou bien être un composant externe à celui-ci.

Du fait de leur commutation à la fréquence de découpage, les interrupteurs S1, S1c, S2, S2c du convertisseur de tension abaisseur-élévateur 110 sont de préférence réalisés dans une technologie qui supporte les hautes fréquences, comme par exemple en technologie GaN ou SiC. La fréquence de découpage est par exemple comprise entre 50 kHz et 100 kHz. Elle peut être inférieure ou supérieure en fonction de la technologie des interrupteurs et de la valeur de l'inductance L.

Notamment, les interrupteurs de basculement T1, T2 commutent à des fréquences relativement plus faibles. En particulier, dans le deuxième mode de fonctionnement, les interrupteurs de basculement T1, T2 commutent à une fréquence comprise entre 50-60Hz. La fréquence de commutation des interrupteurs de basculement peut être inférieure ou supérieure, par exemple de l'ordre de quelques kilohertz, en fonction de la fréquence de la tension alternative délivrée en sortie du convertisseur de tension abaisseur-élévateur 110. Notamment, les interrupteurs de basculement T1, T2 sont en technologie silicium, notamment de type MOSFET.

De préférence, le convertisseur de tension abaisseur-élévateur 110 est réversible. Il peut alors transmettre une puissance depuis les bornes d'entrées 111, 112 vers les bornes de sortie 121, 122, ou depuis les bornes de sortie 121, 122 vers les bornes d'entrée 111, 112. A cet effet, les interrupteurs S1, S1c, S2, S2c des bras B1, B2 sont notamment bidirectionnels en courant et en tension. Les interrupteurs S1, S1c, S2, S2c sont alors par exemple en technologie GaN, notamment HEMT GaN. La bidirectionnalité d'un interrupteur S1, S1c, S2, S2c du convertisseur de tension abaisseur-élévateur 110 peut être réalisée en associant des transistors, notamment des transistors MOSFET SiC. Le deuxième interrupteur de basculement T2, notamment les deux interrupteurs de basculement T1, T2 peuvent être bidirectionnels. Le transistor T1 peut être un transistor MOSFET.

Le circuit d'alimentation sans interruption 100 peut présenter un troisième mode de fonctionnement, par exemple illustré en figure 7. Dans ce troisième mode de fonctionnement, la source de tension continue 40 alimente le premier réseau électrique alternatif 30. A cet effet, le circuit d'alimentation sans interruption 100 peut comprendre des interrupteurs supplémentaires, notamment des relais, pour connecter les bornes de la source de tension continue 40 aux bornes de sortie 121, 122 du convertisseur de tension abaisseur-élévateur 110. Notamment, grâce à sa réversibilité en puissance, le convertisseur de tension abaisseur-élévateur 110 peut envoyer de la puissance de la source de tension continue 40 vers le premier réseau électrique alternatif 30. Le convertisseur de tension abaisseur-élévateur 110 a alors un fonctionnement similaire à celui dans le deuxième mode de fonctionnement. Sur l'alternance positive de la tension alternative V30 du premier réseau électrique 30, le premier interrupteur T1 est fermé et le deuxième interrupteur T2 est ouvert. Sur l'alternance négative de la tension alternative V30 du premier réseau électrique 30, le premier interrupteur T1 est ouvert et le deuxième interrupteur T2 est fermé.

Dans ce troisième mode de fonctionnement, le transfert de puissance se fait de la source de tension continue 40 vers le premier réseau électrique alternatif 30 : on vient donc contrôler les transistors S1, S1c, S2, S2c avec les séquences suivantes en fonction du signe de la tension alternative V30 :

Si Tension V40 positive (premier interrupteur T1 fermé et deuxième interrupteur T2 ouvert) :
- première phase pendant laquelle on charge l'inductance avec la batterie : S1 et S2 fermés
- deuxième phase roue libre : S1 et S2c fermés
- troisième phase de décharge : S1c et S2c fermés

Si Tension V40 négative (T2 fermé et T1 ouvert) :
- première phase pendant laquelle on charge l'inductance avec la batterie : S1c et S2 fermés
- deuxième phase roue libre : S1c et S2c fermés
- troisième phase de décharge : S1 et S2c fermés

## Revendications

1. Circuit d'alimentation (100) configuré pour, dans un premier mode de fonctionnement, alimenter un deuxième réseau électrique alternatif à partir d'un premier réseau électrique alternatif (30) ; et, dans un deuxième mode de fonctionnement, alimenter le deuxième réseau électrique alternatif à partir d'une source de tension continue (40),
ledit circuit comportant un convertisseur de tension abaisseur-élévateur (110) comprenant :
- deux bornes d'entrée (111, 112) ;
- un premier interrupteur (R1), un deuxième interrupteur (R2) et un troisième interrupteur (R3) ;
- un contrôleur configuré pour contrôler le premier interrupteur (R1), le deuxième interrupteur (R2) et le troisième interrupteur (R3) de sorte que :
- dans un premier mode de fonctionnement, les bornes d'entrée (111, 112) reçoivent entre elles une tension alternative (V30) du premier réseau (30) lorsque le premier interrupteur (R1) et le deuxième interrupteur (R2) sont fermés et que le troisième interrupteur (R3) est ouvert,
- dans un deuxième mode de fonctionnement, les bornes d'entrée (111, 112) reçoivent entre elles une tension continue (V40) de la source de tension continue (40) lorsque le premier interrupteur (R1) et le deuxième interrupteur (R2) sont ouverts et que le troisième interrupteur (R3) est fermé
- deux bornes de sortie (121, 122) configurées pour, dans le premier et le deuxième mode de fonctionnement, recevoir entre elles une tension alternative (V50) du deuxième réseau électrique alternatif ;
ledit convertisseur de tension abaisseur-élévateur (110) étant configuré pour passer sans interruption du premier mode de fonctionnement au deuxième mode de fonctionnement et réciproquement, ledit convertisseur de tension abaisseur-élévateur (110) étant en outre configuré pour réaliser une conversion AC/AC entre le premier réseau électrique alternatif (30) et le deuxième réseau électrique alternatif dans le premier mode de fonctionnement.

2. Circuit d'alimentation (100) selon la revendication 1, dans lequel le convertisseur de tension abaisseur-élévateur (110) comprend :
- un premier bras d'interrupteurs (B1) et un second bras d'interrupteurs (B2), chaque bras comprenant deux interrupteurs ayant une borne commune, dite point milieu ;
- une inductance (L) connectée entre les points milieux des premier et deuxième bras d'interrupteurs (B1, B2) ;
des bornes extrémales du premier bras (B1) formant lesdites bornes d'entrée (111, 112) du convertisseur abaisseur-élévateur (110), des bornes extrémales du deuxième bras (B2) formant lesdites bornes de sortie (121, 122) du convertisseur abaisseur-élévateur (110), le circuit d'alimentation (100) étant configuré pour connecter une borne d'entrée (111, 112) à une borne de sortie (121) lors d'un fonctionnement du circuit d'alimentation sans interruption (100).

3. Circuit d'alimentation (100) selon l'une des revendications précédentes, dans lequel ledit convertisseur de tension abaisseur-élévateur (110) est configuré pour, dans le deuxième mode de fonctionnement, réaliser une conversion DC/AC entre la source de tension continue (40) et le deuxième réseau électrique alternatif.

4. Circuit d'alimentation (100) selon l'une des revendications précédentes, comprenant des interrupteurs (T1, T2), dits interrupteurs de basculement, configurés pour connecter sélectivement une des bornes d'entrée (111, 112) avec une première (121) des bornes de sortie.

5. Circuit d'alimentation (100) selon la revendication 4, dans lequel un premier interrupteur de basculement (T1) est connecté entre une première borne d'entrée (111) du convertisseur de tension abaisseur-élévateur (110) et la première borne de sortie (121) du convertisseur de tension abaisseur-élévateur (110) ; et un deuxième interrupteur de basculement (T2) est connecté entre une deuxième borne d'entrée (112) du convertisseur de tension abaisseur-élévateur (110) et la première borne de sortie (121) du convertisseur de tension abaisseur-élévateur (110).

6. Circuit d'alimentation (100) selon la revendication 5, configuré de sorte que, dans le premier mode de fonctionnement, le premier interrupteur (T1) est fermé et le deuxième interrupteur (T2) est ouvert.

7. Circuit d'alimentation (100) selon la revendication 6, configuré de sorte que, dans le premier mode de fonctionnement, une borne du premier réseau électrique alternatif (30) connectée à la première borne d'entrée (111) forme une masse apte à être directement connectée à la masse du premier réseau électrique alternatif (30) ; et une borne du deuxième réseau électrique alternatif connectée à la première borne de sortie (121) forme une masse apte à être directement connectée à la masse du deuxième réseau électrique alternatif.

8. Circuit d'alimentation (100) selon l'une des revendications 5 à 7, configuré de sorte que, dans le deuxième mode de fonctionnement :
- sur l'alternance positive de la tension alternative (V50) du deuxième réseau électrique, le premier interrupteur de basculement (T1) est fermé et le deuxième interrupteur de basculement (T2) est ouvert ; et,
- sur l'alternance négative de la tension alternative (V50) du deuxième réseau électrique, le premier interrupteur de basculement (T1) est ouvert et le deuxième interrupteur de basculement (T2) est fermé.

9. Circuit d'alimentation (100) selon l'une des revendications 5 à 8, configuré pour, dans un troisième mode de fonctionnement, alimenter le premier réseau électrique alternatif (30) à partir de la source de tension continue (40), et de sorte que, dans ledit troisième mode de fonctionnement :
- sur l'alternance positive de la tension alternative (V30) du premier réseau électrique (30), le premier interrupteur de basculement (T1) est fermé et le deuxième interrupteur de basculement (T2) est ouvert ; et,
- sur l'alternance négative de la tension alternative (V30) du premier réseau électrique (30), le premier interrupteur de basculement (T1) est ouvert et le deuxième interrupteur de basculement (T2) est fermé.

10. Circuit d'alimentation (100) selon l'une des revendications précédentes, dans lequel le convertisseur de tension abaisseur-élévateur (110) est réversible.
